Europäisches Patentamt

European Patent Office

Office européen des brevets

(11) Publication number: **0 102 420**
**B1**

(12) **EUROPEAN PATENT SPECIFICATION**

(45) Date of publication of patent specification: **03.06.87**

(51) Int. Cl.⁴: **A 22 C 21/00, B 65 G 47/36**

(21) Application number: **82304493.8**

(22) Date of filing: **25.08.82**

(54) Latch release system for poultry carriers.

(43) Date of publication of application:
**14.03.84 Bulletin 84/11**

(45) Publication of the grant of the patent:
**03.06.87 Bulletin 87/23**

(84) Designated Contracting States:
**AT BE CH DE FR GB IT LI LU NL SE**

(56) References cited:
**DE-B-1 506 927**
**DE-C- 268 588**
**FR-A-1 509 814**
**GB-A-2 041 314**
**US-A-3 032 172**
**US-A-4 022 338**
**US-A-4 317 258**
**US-A-4 351 087**

(73) Proprietor: **Cook Altenpohl, Helen**
**1315 Robin Hood Road**
**High Point North Carolina 27260 (US)**
(73) Proprietor: **Altenpohl, Paul John**
**704 North Westchester Drive**
**High Point North Carolina 27260 (US)**

(72) Inventor: **Altenpohl, William F.**
**Deceased (US)**
Inventor: **Altenpohl, Paul John**
**704 North Westchester Drive**
**High Point North Carolina 27260 (US)**

(74) Representative: **Barlow, Roy James et al**
**J.A.KEMP & CO. 14, South Square Gray's Inn**
**London WC1R 5EU (GB)**

Courier Press, Leamington Spa, England.

## Description

This invention relates generally to the load release operation of article carriers, such as poultry carriers of the type disclosed in prior US—A—3,132,373, US—A—3,291,303 and US—A—3,781,946, by way of example.

In poultry carriers of the foregoing type, the latch element slidably mounted on the pivotally suspended rod-like carrier body is displaced upwardly on one side of the carrier body to release the hook for downward pivotal displacement on the other side of the body in order to effect load drop off. An upward force was accordingly applied to the latch release arm of the latch element by a signal-controlled piston or armature plunger. In such arrangements, as distinguished from carrier arrangements disclosed for example in GB—A—2041314, the moments produced on the carrier body by the upward release force and the shifting load on the hook during load drop off, are both in the same body-tilting direction augmenting load drop off. It was therefore deemed necessary to locate the latch release plunger mechanism on the same side of the carrier body as the latch element and to operate the mechanism so as to produce an upward operating force directly applied to the release arm of the latch element.

However, it is sometimes desirable to locate the latch release plunger mechanism on the opposite side of the carrier body from which the hook projects opposite the latch element. Such relative relocation for the release mechanism is preferred, for example, in an installation as disclosed in our US—A—4317258. In such an installation, two laterally spaced carrier bodies are pivotally suspended by offset side suspension links for simultaneous travel along a common conveyor path. The hooks associated with each pair of carriers project from the two carrier bodies toward each other opposite the latch elements so that the associated power-operated release mechanisms may be positioned on the remote sides of the carrier bodies. The space between each pair of carriers must therefore be sufficient to avoid load drop off interference between the confronting hooks. To reverse the orientation of the carriers would avoid drop off interference, but would create a problem with the mounting of the power-operated release devices between the carriers.

It is, therefore, an important object of the present invention to provide a novel latch release system for carriers of the aforementioned type of poultry carrier whereby the power-operated release mechanism may be located on the same side of the carrier bodies from which the hooks project without an adverse effect on the tilting of the body during load drop off.

In accordance with the present invention, there is provided a device for carrying articles comprising a conveyor with at least one article carrier including an elongated body suspended from the conveyor and pivotable about a first pivot axis parallel to the direction of conveyance, a hook pivotally mounted on the body at a second pivot axis below the first pivot axis, latch means slidably mounted externally on the body for holding the hook in a latched position, and power operated release means mounted in operative relation to the conveyor for applying a latch releasing force transmitted to the latch means at a point laterally spaced from the body and the hook in such a manner as to produce a body-tilting moment in the direction of pivotal displacement of the hook under load from said latched position, characterised in that the latch-releasing force is a downward force applied to force transfer means, which are pivotally mounted on the body between opposite end portions of the force transfer means; the force transfer means being engageable with the power-operated release means for transmitting the latch-releasing force to the latch means.

GB—A—2041314 discloses a carrier requiring rotation of a latch element about a horizontal pivot shaft to release the carrier and has the power-operated release means at one end of the pivot shaft and the load suspended at the opposite end. Moreover, this arrangement is quite different from that shown in our said US—A—4317258 over which the present invention offers considerable improvement.

The latch element preferably has a release arm which is positioned on one side of the longitudinal axis of the carrier body and is engaged by the force transfer means. Advantageously the force transfer means is a lever element having one end portion through which an upward displacing force is exerted on the latch element, while the other end portion of the lever element is in alignment with a plunger of the signal-controlled, power operated release mechanism located at each load drop off station on that side of each carrier body opposite the latch element. The plunger of the power operated release mechanism is downwardly displaced during a power stroke to exert a downward operating force on the other end portion of the lever element in a direction parallel to the axis of the rod-like carrier body, producing a moment tending to tilt the carrier body in the same angular direction as displacement of the hook by the load when released from the latched position.

Figure 1 is a view transverse to the conveyor path of a poultry conveyor system at a load drop off station, showing a typical installation for the present invention.

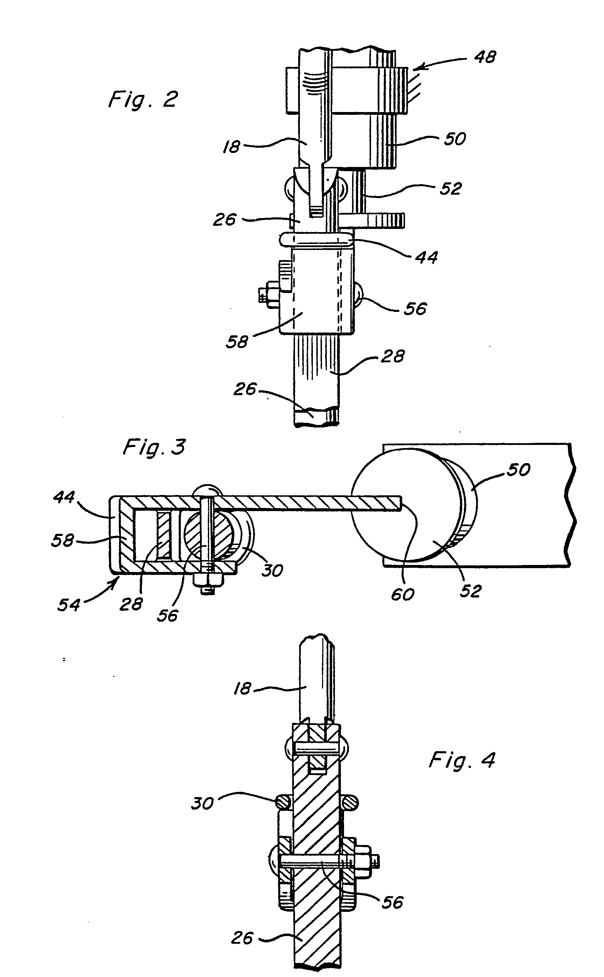

Figure 2 is a partial side elevation view of a carrier as viewed from a plane indicated by line 2—2 in Fig. 1.

Figure 3 is an enlarged partial section view taken substantially through a plane indicated by section line 3—3 in Fig. 1.

Figure 4 is an enlarged partial section view taken substantially through a plane indicated by section line 4—4 in Fig. 1.

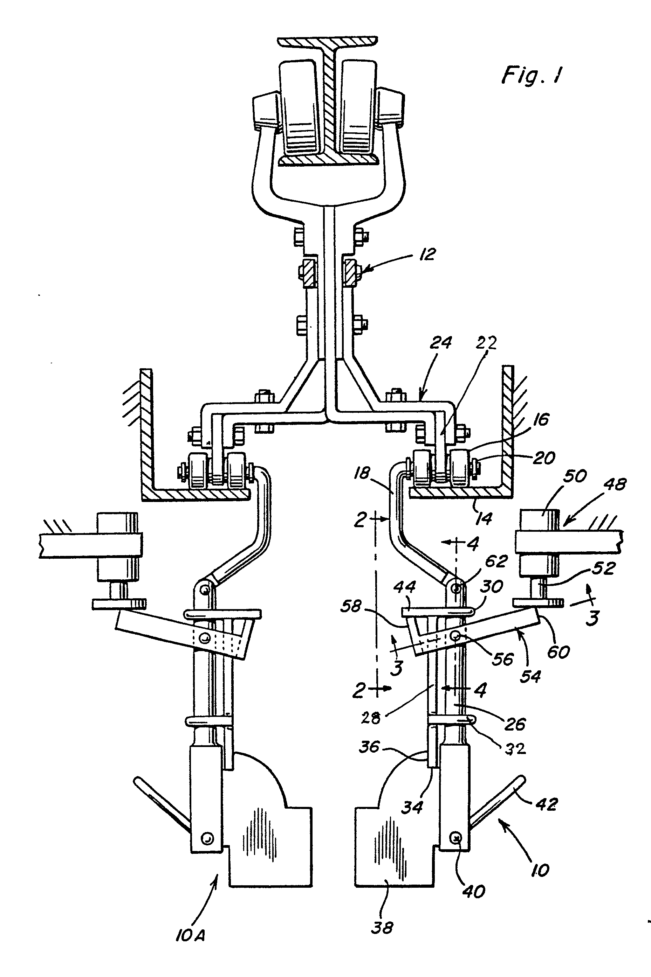

Referring now to the drawings in detail Fig. 1 illustrates a pair of similar poultry carriers 10 and 10A pivotally suspended from a common overhead conveyor 12 for simultaneous travel along a single conveyor path through one or more drop off stations at which the carriers are supported on fixed track sections 14 by means of roller assemblies 16. Side suspension links 18 pivotally interconnect the carriers with the conveyor through the roller shafts 20 associated with the roller assemblies and the pulling links 22 coupled to the conveyor chain by a bar 24. Such an arrangement is disclosed in our US—A—4,317,258, aforementioned.

Each carrier includes an elongated, rod-like body 26 on which a latch element 28 is slidably mounted, externally, by means of upper and lower loops 30 and 32. The latch element is gravitationally biased to a downward latched position as shown with its lower end 34 received within a notch 36 of a counterweight plate 38 pivotally mounted on the carrier body by a pivot 40. A hook 42 is connected to the counterweight and projects laterally from the geometrical axis of the carrier body 26 at an upward incline as shown, to support a load thereon. A release arm 44 projects laterally from the upper end of the latch element on the side of body 26 opposite the hook 42. The latch element is displaced upwardly by a force applied to release arm 44 in order to withdraw end 34 from notch 36 and permit the hook to pivot downwardly under load about pivot 40. The load will therefore slide off the hook during a load drop off operation as is well-known in the art. Such load drop off produces a moment on the carrier body because of the upward latch releasing force applied to the latch element 28 through arm 44 and the downward pivoting of hook 42. This load drop off moment tends to tilt the carrier body in the same angular direction as displacement of hook 42 so as to accelerate and insure drop off of the load.

Associated with each load drop off station are signal-controlled power operated plunger mechanisms 48. Each mechanism 48 includes a fluid cylinder or electromagnetic device 50 that is fixedly mounted in laterally spaced relation to the common conveyor path. Because of space limitation and mounting requirements, the power operated devices 50 are located on the outside of the carriers 10 and 10A rather than between the carriers. Further, the devices 50 are operatively aligned so that the plungers 52 engage force transfer elements 54 pivotally mounted by pivots 56 on the carrier bodies. During a power stroke, each plunger 52 is displaced downwardly to apply an operating force to the element 54 in a direction parallel to the axis of body 26 along which the latch element is displaceable on the opposite side of the body.

The force transfer element 54 is a lever having opposite end portions 58 and 60, respectively, engaging the latch release arm 44 and the plunger 52. It will therefore be apparent that a downward operating force applied by plunger 52 to the lever element 54 will be transmitted to the latch element as an upward latch releasing force to effect load drop off. A moment is produced by such downward operating force on the carrier body through the intermediate pivot 56 of lever element 54 in the same angular displacement of hook 42 from its latched position. The pivot 56 of element 54 and pivot 40 of hook 42 substantially intersect the axis of body 26 perpendicular thereto, as does the pivot 62 between the body 26 and the side suspension link 18. Thus, the orientation of the carriers 10 and 10A with the latch elements on confronting sides of the carrier bodies and the downward direction of the operating forces will effect load drop off without any adverse tilting affect.

### Claims

1. A device for carrying articles comprising a conveyor (12) with at least one article carrier including an elongated body (26) suspended from the conveyor (12) and pivotable about a first pivot axis (62) parallel to the direction of conveyance, a hook (42) pivotally mounted on the body at a second pivot axis (40) below the first pivot axis, latch means (28) slidably mounted externally on the body for holding the hook in a latched position, and power operated release means (48) mounted in operative relation to the conveyor for applying a latch releasing force transmitted to the latch means at a point laterally spaced from the body and the hook, in such a manner as to produce a body-tilting moment in the direction of pivotal displacement of the hook under load from said latched position, characterised in that the latch-releasing force is a downward force applied to force transfer means (54), which are pivotally mounted on the body (26) between opposite end portions (58 and 60) of the force transfer means; the force transfer means being engageable with the power-operated release means for transmitting the latch-releasing force to the latch means (28).

2. An article carrier according to claim 1, characterised in that said force transfer means includes a lever element (54).

3. An article carrier according to claim 2, characterised in that said body is a cross-sectionally circular rod (26) and in that said latch-releasing force is applied to and exerted by the lever element along parallel directions and in opposite directional senses at said opposite end portions (58 and 60) spaced from the longitudinal axis of the rod (26).

4. An article carrier according to claim 1, characterised in that said force transfer means comprises a force-transmitting element.

5. An article carrier according to any one of claims 1 to 4, characterised in that said body has its longitudinal axis perpendicular to said spaced pivot axes about which the hook and the force transfer means respectively are displaceable.

6. An article carrier according to claim 1, characterised in that said force transfer means exerts an upward releasing force on the latch means at a location transversely spaced from the body on one side of the longitudinal axis of the body opposite a load suspended from the hook, said power-operated release means being spaced laterally from the body on said opposite side of the longitudinal axis for exerting said downward operating force on the force transfer means.

7. An article carrier according to claim 6, characterised in that said force transfer means includes a lever element pivotally mounted on the carrier body in spaced relation above the hook.

## Patentansprüche

1. Vorrichtung zum Fördern von Gegenständen, mit einem Förderer (12), der mindestens ein Tragelement für den zu befördernden Gegenstand aufweist, welcher einen vom Förderer (12) nach unten hängenden langgestreckten und um eine erste Schwenkachse (62) schwenkbaren Körper (26) aufweist, wobei die erste Schwenkachse parallel zur Förderrichtung verläuft, und wobei ein schwenkbar auf dem Körper an einer zweiten Schwenkachse (40) unterhalb der ersten Schwenkachse (40) befestigten Haken (42) befestigt ist, und wobei eine Verriegelungseinrichtung (28) gleitend außen auf dem Körper zum Festhalten des Hakens in einer verriegelten Stellung angebracht ist, während in Arbeitsbeziehung zum Förderer eine strombetriebene Löseeinrichtung (48) angebracht ist, welche eine auf die Verriegelungseinrichtung an einem seitlich im Abstand vom Körper und Haken befindlichen Punkt übertragene Kraft zum Lösen der Verriegelung in einer Weise aufbringt, daß in Richtung der Schwenkbewegung des Hakens unter Belastung aus der verriegelten Stellung ein Moment zum Kippen des Körpers erzeugbar ist, dadurch gekennzeichnet, daß die Kraft zum Lösen der Verriegelung nach unten gerichtet ist und bei Aufbringung die Übertragungseinrichtung (54), die schwenkbar auf dem Körper (26) angeordnet ist, zwischen einander gegenüberliegenden Endabschnitten (58 und 60) der Kraftübertragungseinrichtung beaufschlagt, wobei die Kraftübertragungseinrichtung mit der strombetriebenen Löseeinrichtung zur Übertragung der Kraft zum Lösen der Verriegelung auf die Verriegelungseinrichtung (28) in Eingriff bringbar ist.

2. Vorrichtung nach Anspruch 1, dadurch gekennzeich net dass die Kraftübertragungseinrichtung ein Hebelteil (54) aufweist.

3. Vorrichtung nach Anspruch 2, dadurch gekennzeichnet, daß der Körper ein Stab (26) mit kreisförmigem Querschnitt ist, und daß die Kraft zum Lösen der Verriegelung auf das Hebelteil aufbringbar und von diesem in entgegengesetzter Richtung parallel an den einander gegenüberliegenden Endabschnitten (58 und 60) ausübbar ist, welche sich im Abstand von der Längsachse des Stabes (26) befinden.

4. Vorrichtung nach Anspruch 1, dadurch gekennzeichnet, daß die Kraftübertragungseinrichtung ein Kraftübermittlungsteil aufweist.

5. Vorrichtung nach einem der Ansprüche 1 bis 4, dadurch gekennzeichnet, daß die Längsachse des Körpers senkrecht zu den im Abstand voneinander befindlichen Schwenkachsen verläuft, um welche jeweils der Haken bzw. die Kraftübertragungseinrichtung bewegbar sind.

6. Vorrichtung nach Anspruch 1, dadurch gekennzeichnet, daß die Kraftübertragungseinrichtung eine nach oben gerichtete Lösekraft auf die Verriegelungseinrichtung an einer Stelle ausübt, welche in Querrichtung im Abstand vom Körper auf einer Seite einer vom Haken hängenden Last gegenüberliegenden Seite der Längsachse des Körpers liegt, wobei die Kraftbetriebene Löseeinrichtung seitlich im Abstand vom Körper auf der gegenüberliegenden Seite der Längsachse angeordnet ist und die nach unten gerichtete Arbeitskraft auf die Kraftübertragungseinrichtung ausübt.

7. Vorrichtung nach Anspruch 6, dadurch gekennzeichnet, daß die Kraftübertragungseinrichtung ein auf dem Förderkörper schwenkbar angeordnetes Hebelteil im Abstand vom Haken und oberhalb desselben aufweist.

## Revendications

1. Un appareil pour porter des objets comprenant un transporteur (12) avec au moins un porteur d'objet comprenant un corps allongé (26) suspendu au transporteur (12) et monté à pivot autour d'un premier axe (62) parallèle à la direction du transport, un crochet (42) monté à pivot sur le corps autour d'un second axe (40) situé sous le premier axe, des moyens de verrouillage (28) montés coulissants à l'extérieur du corps pour maintenir le crochet dans une position verrouillée, et des moyens de déverrouillage (48) commandés par des moyens moteurs, montés en relation fonctionnelle avec le transporteur pour appliquer une force de déverrouillage transmise aux moyens de verrouillage en un point éloigné latéralement du corps et du crochet, de façon à produire un moment de basculement du corps dans le sens du pivotement du crochet sous l'effet de sa charge à partir de ladite position verrouillée, caractérisé en ce que la force de déverrouillage est une force s'exerçant vers le bas, appliquée à des moyens de transmission de force (54), qui sont montés à pivot sur le corps (26) entre les parties terminales opposées (58 et 60) des moyens de transmission de force; lesdits moyens de transmission de force pouvant venir en prise avec les moyens de déverrouillage commandés par des moyens moteurs pour transmettre la force de déverrouillage aux moyens de verrouillage (28).

2. Un porteur d'objet selon la revendication 1, caractérisé en ce que lesdits moyens de transmission de force comprennent un élément-levier (54).

3. Un porteur d'objet selon la revendication 2, caractérisé en ce que ledit corps est une tige (26) de section transversale circulaire et en ce que ladite force de déverrouillage est appliquée à l'élément-levier et exercée par l'élément-levier, selon des directions parallèles et dans des sens opposés, au niveau desdites parties terminales opposées (58 et 60) éloignées de l'axe longitudinal de la tige (26).

4. Un porteur d'objet selon la revendication 1, caractérisé en ce que lesdits moyens de transmission de force comprennent un élément de transmission de force.

5. Un porteur d'objet selon l'une des revendications 1 à 4, caractérisé en ce que ledit corps a son axe longitudinal perpendiculaire auxdits axes de pivotement espacés l'un de l'autre autour desquels le crochet et les moyens de transmission de force sont respectivement mobiles.

6. Un porteur d'objet selon la revendication 1, caractérisé en ce que les moyens de transmission de force exercent une force de déverrouillage vers le haut sur les moyens de verrouillage en un point éloigné transversalement du corps, du côté de l'axe longitudinal du corps opposé à une charge suspendue au crochet, lesdits moyens de déverrouillage commandés par des moyens moteurs étant éloignés latéralement du corps, dudit côté opposé à l'axe longitudinal, pour exercer une force de commande vers le bas sur les moyens de transmission de force.

7. Un porteur d'objet selon la revendication 6, caractérisé en ce que les moyens de transmission de force comprennent un élément-levier monté à pivot sur le corps du porteur de façon à être éloigné et au-dessus du crochet.

Fig. 1

0 102 420

*Fig. 2*

18
48
50
52
26
44
56
58
28
26

*Fig. 3*

44
58
54
28
56
30
60
52
50

18

*Fig. 4*

30
56
26